# EUROPÄISCHE PATENTSCHRIFT

(11) **EP 1 728 115 B1**
(45) Veröffentlichungstag und Bekanntmachung des Hinweises auf die Patenterteilung: **19.09.2007**
(21) Anmeldenummer: 05729614.7
(22) Anmeldetag: 18.03.2005
(51) Int. Cl.: G02B 21/00

(54) **HOCHGESCHWINDIGKEITS-VERMESSUNGSEINRICHTUNG UND VERFAHREN NACH DEM GRUNDPRINZIP DER KONFOKALEN MIKROSKOPIE**
HIGH-SPEED MEASURING DEVICE AND METHOD BASED ON A CONFOCAL MICROSCOPY PRINCIPLE
DISPOSITIF DE MESURE A VITESSE ELEVEE ET PROCEDE BASE SUR LE PRINCIPE DE MICROSCOPIE CONFOCALE

(30) Priorität: 19.03.2004 DE 102004014048
(43) Veröffentlichungstag der Anmeldung: 06.12.2006
(73) Patentinhaber: Sirona Dental Systems GmbH, 64625 Bensheim (DE)
(72) Erfinder: PFEIFFER, Joachim, 64625 Bensheim (DE)
(74) Vertreter: Sommer, Peter
(86) Internationale Anmeldenummer: PCT/EP2005/051276
(87) Internationale Veröffentlichungsnummer: WO 2005/091046

(56) Entgegenhaltungen:
- EP-A- 1 186 928
- US-B1- 6 300 618
- ISHIHARA M ET AL: "HIGH-SPEED SURFACE MEASUREMENT USING A NONSCANNING MULTIPLE-BEAM CONFOCAL MICROSCOPE" OPTICAL ENGINEERING, SOC. OF PHOTO-OPTICAL INSTRUMENTATION ENGINEERS. BELLINGHAM, US, Bd. 38, Nr. 6, Juni 1999 (1999-06), Seiten 1035-1040, XP000866795 ISSN: 0091-3286

## Beschreibung

### Technisches Gebiet

Die Erfindung betrifft eine Vermessungseinrichtung und ein Verfahren nach dem Grundprinzip der konfokalen Mikroskopie gemäß dem Oberbegriff des Anspruchs 1.

Derartige Vermessungseinrichtungen werden zur Vermessung eines Objekts verwendet und erlauben dabei sowohl die Vermessung eines Punktes entlang einer Achse (zweidimensionale Vermessung) als auch einer um die Achse herum angeordneten Fläche (dreidimensionale Vermessung). Damit eignet sich eine derartige Vorrichtung für einen Punktsensor wie auch für einen Flächensensor.

### Stand der Technik

Die Grundprinzipien der konfokalen 3D-Vermessung sind bekannt. Die Bestimmung der Höhe des Objektpunktes geschieht nach dem Stand der Technik dadurch, das pro Punkt einer Lochrasterplatte einer Blendenanordnung bestimmt wird, in welcher Stellung des Objekts relativ zur Abbildungsoptik bzw. zur gesamten Messvorrichtung die größte Lichtmenge rückwärtig durch die Lochrasterplatte tritt. Dazu werden während der Bewegung des Objekts relativ zur Abbildungsoptik eine Vielzahl von Einzelbildern aufgezeichnet und für jeden Bildpunkt wird das Bild aus Bildfolge ermittelt, bei dem die Intensität am größten ist. Aus der Kenntnis der Stellung des Einzelbildes innerhalb der Bildfolge heraus kann das Höhenprofil des Objekts bestimmt werden. Dabei müssen allerdings typischerweise Bildfolgen aus einigen 10 bis 100 Bildern aufgezeichnet werden, so dass der Messvorgang bei Verwendung gängiger Aufnahmetechniken mehrere Sekunden oder noch länger dauern muss. Eine Verkürzung der gesamten Aufnahme auf einen für die Erstellung einer intraoralen Dentalaufnahme als akzeptabel angesehenen Zeitraum von etwa 200ms erfordert die Verwendung extrem aufwendiger Videotechnik und Datenauswertung oder den Verzicht auf Genauigkeit in mindestens einer der drei Dimensionen. Außerdem werden auch an die Mechanik zur Erzeugung der relativen Bewegung zwischen Objektiv und Abbildungsoptik hohe Anforderungen gestellt.

Im Stand der Technik M. Ishihara, H. Sasaki, "High-speed surface measurement using a nonscanning multiple-beam confocal microscope", Opt Eng., Vol.36, Nr. 6, 1035-1040 (Juin 1999), ist bekannt, eine schnelle Änderung des Abstandes zwischen Objekt und Aufnahmeoptik durch Einfügen eines Elements aus einem Medium mit anderer optischer Dichte zu erzeugen, welche eine veränderliche Dicke hat und so bewegt wird, dass die effektive Dicke im Zeitverlauf verändert wird. Als Medium kommt hier beispielsweise Glas in Frage. Ein weiteres konfokales Mikroskop ist in der US 6,300,618 B offenbart.

Weiterhin ist der Einsatz von 3D-Vermessungstechniken bei einer Intraoralkamera zur Vermessung von Zähnen bekannt, die nach dem Prinzip der Phase-Shift-Triangulation arbeiten.

Darüber hinaus ist für die gängigen 3D-Vermessungsverfahren der Einsatz von Punktsensoren oder Zeilensensoren bekannt, wobei dann zur Vermessung von 3D-Objekten eine Verschiebung von Objekt und Sensor vorgenommen wird, was oftmals als Scannen bezeichnet wird.

### Darstellung der Erfindung

Gemäß der Erfindung, wie im Anspruch 1 definiert, umfasst die Vermessungseinrichtung nach dem Grundprinzip der konfokalen Mikroskopie eine Lichtquelle, eine Abbildungsoptik zur Fokussierung des von der Lichtquelle abgestrahlten Lichts auf ein zu vermessendes

Objekt und weiterhin einen Bildempfänger für das am Objekt zurückgestreute und durch dieselbe Abbildungsoptik hindurchgetretene Licht eines Objektpunkts mit mindestens zwei strahlungsempfindlichen Sensorelementen. Die Vermessungseinrichtung hat dabei die Eigenschaft, dass einem durch die Abbildungsoptiken bestrahlten Objektpunkt mindestens zwei Sensorelemente zugeordnet sind. Die Vermessungseinrichtung enthält Mittel zur Veränderung der optischen Weglänge im Strahlengang zwischen der Blendenanordnung und dem Objekt, wobei der optische Abstand der Bildebene von der Abbildungsoptik in vorgegebener Weise veränderbar ist. Die Abhängigkeit der Akkumulation von Ladungen in den mindestens zwei Sensorelementen von der Lichtintensität des Beobachtungsstrahlenganges während des Belichtungszeitraums lässt sich derart beeinflussen, dass ein Zusammenhang mit dem optischen Abstand der Bildebene von der Abbildungsoptik hergestellt werden kann, so dass aus der Verteilung der aus den mindestens zwei Sensorelementen während eines Belichtungszeitraumes gewonnenen Intensitätswerte eine Höhenkoordinate des Objekts rekonstruierbar ist. Vorteilhafterweise ist der Abbildungsbereich des Objekts in der Ebene der strahlungsempfindlichen Sensorelemente mindestens so groß, dass mindestens eines der beiden Sensorelemente während eines Belichtungszeitraumes vollständig innerhalb des Abbildungsbereichs liegt.

Diese Rekonstruktion ist dadurch möglich, dass jeder veränderten optischen Weglänge eine aus den beiden Sensorelementen gewonnene Information zugeordnet werden kann. Mit einer Vorrichtung nach diesem Prinzip ist es möglich, die Vermessung in vergleichsweise kurzer Zeit mit der Methode der konfokalen Mikroskopie durchzuführen. Dazu ist nur eine einzige Aufnahme erforderlich, bei welcher während des Belichtungszeitraums eine Verstellung des optischen Abstands erfolgt.

Darüber hinaus kann die Vermessungseinrichtung eine Blendenanordnung zur Erzeugung einer Helligkeitsverteilung am Objekt enthalten. Dadurch ist es möglich, mehr als einen Objektpunkt gleichzeitig zu untersuchen.

Eine vorteilhafte Ausgestaltung der Vermessungseinrichtung ist dadurch gekennzeichnet, dass durch die Blendenanordnung mehrere Objektpunkte erzeugt werden können, wobei es mindestens so viele zusammenwirkende Gruppen von Sensorelementen geben sollte, wie Objektpunkte erfasst werden. Die Abgrenzung der Höhenkoordinaten wird auf diese Weise verbessert.

Weiterhin kann die Vermessungseinrichtung im Beobachtungsstrahlengang zwischen Objekt und Empfänger Mittel zum Umlenken des Beobachtungsstrahlenganges besitzen. Damit ist eine räumliche Trennung von Licht und Empfängeroptik möglich, die die Anordnung der benötigten Bauteile unter beengten Platzverhältnissen erleichtert.

Vorteilhafterweise ist dieses Umlenkmittel als Strahlteiler ausgebildet.

Dieses Umlenkmittel ist vorzugsweise zwischen der Blendenanordnung und der Lichtquelle angeordnet. Darüber hinaus ist eine Anordnung zwischen Abbildungsoptik und Blendenanordnung möglich.

Eine günstige Ausgestaltung der Vermessungseinrichtung besteht darin, dass eine bewegliche Blende vorgesehen ist, die in Abhängigkeit des Verschiebewegs die Sensorelemente zumindest teilweise abschattet.

Die Blende könnte derart gestaltet sein, dass eine Verschiebung der Blende eine Verringerung der Abschattung des mindestens einen Sensorelements und gleichzeitig eine Erhöhung der Abschattung des mindestens einen anderen Sensorelements bewirkt.

Weiterhin kann die Blende in einer Anfangsposition einen Teil der Sensorelemente vollständig abschatten und in einer Endposition einen anderen Teil der Sensorelemente vollständig abschatten und in einer Zwischenposition sowohl einen Teil der einen als auch einen Teil der anderen Sensorelemente abschatten. Das kann mit demselben lichtundurchlässigen Bauteil der Blende geschehen. So lassen sich größtmögliche Intensitätsunterschiede in den Sensorelementen erreichen und somit der Signalabstand erhöhen.

Vorteilhafterweise entspricht dabei der Grad der Abschattung des einen Teils der Sensorelemente dem Grad der belichteten Fläche des anderen Teils der Sensorelemente. Auf diese Weise wird eine Linearisierung der aus der Verteilung der Intensitätswerte der mindestens zwei Sensorelemente gewonnenen Beziehung ermöglicht und die Kalibrierung des Systems vereinfacht.

Eine vorteilhafte Weiterbildung der Erfindung besteht darin, dass die Blendenanordnung zur zweidimensionalen Abtastung des Objekts ausgebildet ist. Die Blendenanordnung ist hierfür zweidimensional ausgebildet und weist eine Vielzahl von einzelnen, zueinander beabstandeten Blendenöffnung auf. Der Abstand einzelner Blendenöffnungen zueinander bestimmt ein Tastverhältnis der Blendenanordnung. Derartige Blendenanordnungen sind aus der konfokalen Messung hinreichend bekannt.

Vorteilhafterweise sind Verstellmittel vorgesehen, um die Blendenanordnung so zu verstellen, dass auch vom Tastverhältnis der Blendenanordnung in einer ersten Messung nicht abgebildete Bereiche in einer zweiten Messung erfasst werden. Dies führt zu einer Erhöhung der Auflösung über das durch das Tastverhältnis gegebene Maß hinaus.

Als Bildempfänger zur Erstellung von zweidimensionalen Aufnahmen, wobei die eine Dimension insbesondere eine Höhenkoordinate ist, ist ein Zeilensensor geeignet. Für dreidimensionale Aufnahmen mit einer Höhenkoordinate ist als Bildempfänger ein Flächensensor geeignet.

Vorteilhafterweise ist der Bildempfänger als CCD-Sensor ausgeführt. Alternativ dazu kann der Bildempfänger als CMOS-Sensor ausgebildet sein.

Die Veränderung der Empfindlichkeit der Sensorelemente kann über einen im Beobachtungsstrahlengang angeordneten Strahlteiler erfolgen, der das gleiche Bild an ein zweites Sensorelement übermittelt, wobei zwischen den beiden Sensorelementen mittels elektronischer und/oder optischer Hilfsmittel während des Vermessungszeitraumes übergeblendet wird. Dies erlaubt das Betreiben zweier unabhängiger Sensoren.

Vorteilhafterweise nimmt die Empfindlichkeit der mindestens zwei zusammenwirkenden Sensorelemente mit fortschreitender Veränderung der optischen Weglänge in dem einen Sensorelement zu und in dem anderen Sensorelement ab. Dadurch lässt sich ein einfacher Zusammenhang zwischen der Information der Sensorelemente und der zu bestimmenden Höhe herstellen.

Es ist sinnvoll, den mittleren Tastabstand der Blendenanordnung der gewünschten Messgenauigkeit anzupassen.

Das erfindungsgemäße Verfahren gemäß Anspruch 23 besteht darin, dass nach dem Grundprinzip der konfokalen Mikroskopie aus einer Lichtquelle Licht auf ein zu vermessendes Objekt abgestrahlt wird, wobei das Licht über eine Abbildungsoptik fokussiert wird, und bei dem weiterhin das am Objekt zurückgestreute und durch dieselbe Abbildungsoptik hindurchgetretene Licht eines Objektpunkts mittels eines Bildempfängers mit mindestens zwei strahlungsempfindlichen Sensorelementen empfangen wird. Die Vermessung ist dadurch gekennzeichnet, dass einem bestrahlten Objektpunkt mindestens zwei Sensorelemente zugeordnet sind. Weiterhin ist der optische Abstand der Bildebene in vorgegebener Weise über Mittel, die im Strahlengang zwischen der Blendenanordnung und dem Objekt angeordnet sind, veränderbar und die Abhängigkeit der Akkumulation von in den mindestens zwei Sensorelementen erzeugten Ladungen von der Lichtintensität im Beobachtungsstrahlengang wird während eines Belichtungszeitraums über Mittel so verändert, dass ein Zusammenhang zwischen der Akkumulation und dem optischen Abstand der Bildebene von der Abbildungsoptik hergestellt ist, sodass aus der Verteilung der aus den mindestens zwei Sensorelementen während eines Belichtungszeitraumes gewonnenen Intensitätswerte eine Höhenkoordinate des Objekts rekonstruierbar ist. Der Abbildungsbereich des Objekts in der Ebene der strahlungsempfindlichen Sensorelemente ist mindestens so groß, dass mindestens eines der beiden Sensorelemente während eines Belichtungszeitraumes vollständig innerhalb des Abbildungsbereichs liegt

### Kurzbeschreibung der Zeichnung

Das erfindungsgemäße Verfahren wird anhand der Zeichnung erläutert. Es zeigen:
- Fig. 1: Ein grundsätzlicher Aufbau der Vermessungseinrichtung nach dem Grundprinzip der konfokalen Mikroskopie mit der erfindungsgemäßen Ausgestaltung, die
- Fig. 2: das zugrunde liegende Vermessungsproblem, dargestellt anhand eines Zahnes, die
- Fig. 3: eine Verdeutlichung des Vermessungsproblems anhand einer Kavität
- Fig. 4A: den zeitlichen Intensitätsverlauf des von einem Punkt des Objekts zurückgestreuten Lichts hinter der Blendenanordnung im Beobachtungsstrahlengang, während der Veränderung von d (die zeitliche Position des Intensitätsmaximums beinhaltet die Information über die Höhe z des Objektspunkts), die
- Fig. 4B: eine Intensitätsverteilung der Veränderung des optischen Wegs beim Abtasten des Objekts, die
- Fig. 5: eine Seitenansicht einer erfindungsgemäßen Blende, die unmittelbar benachbart zum Bildempfänger angeordnet ist, der aus zwei ineinander verschobenen Matrizen von Sensorelementen besteht, die
- Fig. 6: eine Prinzipskizze des Bildempfängers mit zwei Sensorelementen, die
- Fig. 7A-C: den qualitativen Verlauf der in den Sensorelementen anfallenden Intensität und die dadurch erzeugten Ladungen, die
- Fig. 8: eine Ausführungsform, bei der das gleiche Bild mittels eines Strahlteilers auf zwei räumlich getrennte Bildempfänger abgebildet wird, die
- Fig. 9A-C: den qualitativen Verlauf der in den Sensorelementen anfallenden Intensität und die dadurch erzeugten Ladungen in einer Ausführungsform gemäß Fig. 8, die
- Fig. 10A-C: verschiedene mögliche Ausführungsformen erfindungsgemäß einsetzbarer Bildempfänger, die
- Fig. 11A-C: verschiedene Anordnungsmöglichkeiten der Sensorgruppen, die
- Fig. 12A-B: eine gemäß einer Weiterbildung der Erfindung verwendbare Anordnung von Glaskeilen zur Veränderung der optischen Dicke des Strahlengangs in zwei Positionen, die
- Fig. 13: eine alternativ zu Fig. 12 einsetzbare Anordnung zur Veränderung der optischen Weglänge, die auf der Verwendung von Reflektoren basiert, wobei ein Reflektor mittels Tauchspulen verfahrbar ist. Der Reflektor ist dabei in zwei verschiedenen Lagen dargestellt.

### Ausführungsbeispiel der Erfindung

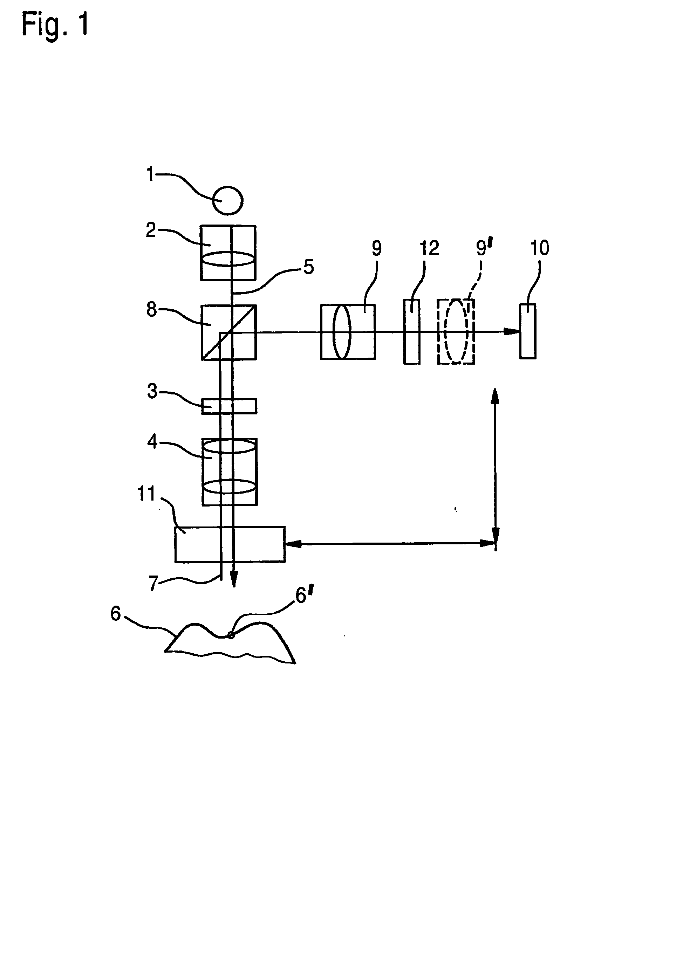

In **Fig. 1** ist ein grundsätzlicher Aufbau der Vermessungseinrichtung nach dem Grundprinzip der konfokalen Mikroskopie dargestellt. Die Vermessungseinrichtung umfasst eine Lichtquelle 1, die typischerweise monochromatisches oder weißes Licht abstrahlt.

Über eine Optik 2 wird die Lichtquelle 1 in geeigneter Weise auf eine Blendenanordnung 3 abgebildet. Die Blendenanordnung 3 kann als Lochrasterplatte ausgebildet sein, bei höher entwickelten Anwendungen kann auch eine Anordnung von Mikrolinsen verwendet werden. Diese Anordnung kann gegebenenfalls zur flächendeckenden Abtastung des Objekts auch schnell bewegt werden, wobei dann eine Aufnahme für jede Position erforderlich ist.

Mittels einer Abbildungsoptik 4, die meist telezentrisch gestaltet ist, wird das aus der Blendenanordnung 3 austretende Licht 5 auf ein zu vermessendes Objekt 6 abgebildet. Der optische Abstand der Abbildungsoptik 4 kann relativ zum Objekt 6 verändert werden, so dass unterschiedliche Höhenlinien des zu vermessenden Objekts in der Bildebene der Abbildungsoptik liegen. Die auf diesem Weg erzeugten Lichtpunkte auf dem zu vermessenden Objekt 6 werden von diesem zurückgestreut und durchtreten die Blendenanordnung 3 als Beobachtungsstrahlengang 7 in umgekehrter Richtung wie das Licht 5.

Die zurückgestreute Lichtmenge erreicht immer für die Objektpunkte 6' des Objekts 6 ein Maximum, die gerade in der Bildebene der Abbildungsoptik 4 liegen. In diesem Fall wird die Lichtintensität deutlich stärker als bei einer Rückstreuung von Licht außerhalb der Bildebene.

Das die Blendenanordnung 3 rückwärtig durchdringende Licht des Beobachtungsstrahlengangs 7 wird mittels eines Strahlteilers 8 und einer Empfängeroptik 9 auf einen Bildempfänger 10 abgebildet, mittels welchem ein elektronisches Signal gewonnen wird, das einem Rechner zur Auswertung zugeführt wird.

Die Veränderung des optischen Abstands zwischen der Abbildungsoptik 4 und dem Objekt 6 geschieht über Mittel zur Veränderung der optischen Weglänge 11.

Dieses Element kann zwischen der Aufnahmeoptik und dem Objekt eingefügt werden oder zwischen der Blendenanordnung und der Aufnahmeoptik.

Es ist weder notwendig, dass ein linearer Zusammenhang zwischen der Bewegung dieses Elements und dem scharfen Bereich im Objektraum besteht, noch ist es notwendig, dass eine bestimmte Höhenlinie im Objekt zur gleichen Zeit scharf abgebildet wird, da ein derartiges Verhalten durch entsprechende Eichverfahren korrigierbar ist.

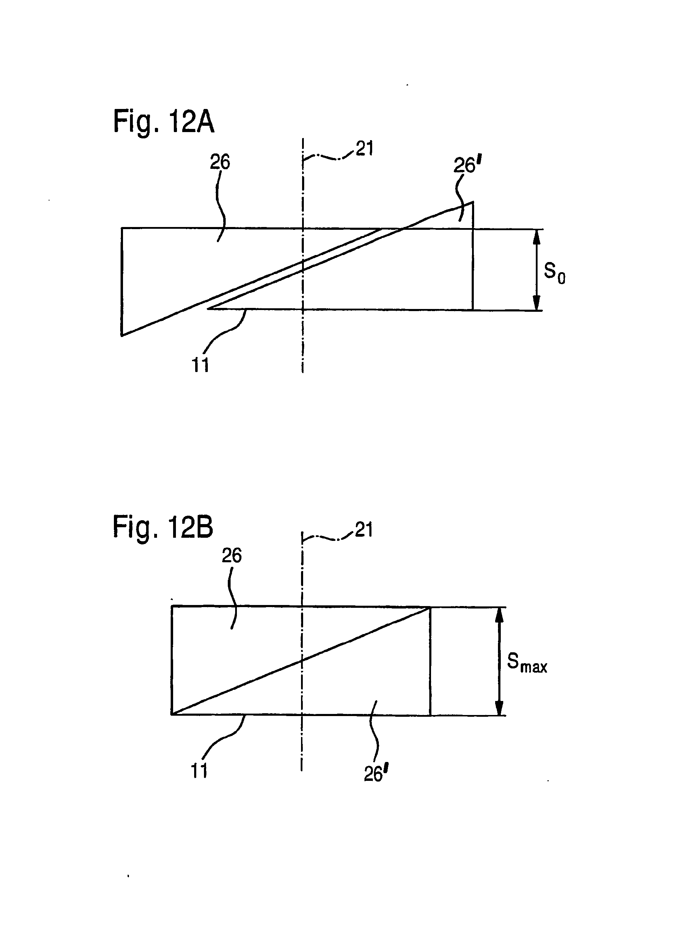

Eine bevorzugte Anordnung eines derartigen Elements als ein Mittel 11 zur Veränderung der optischen Weglänge im Strahlengang zwischen der Blendenanordnung 3 einerseits und dem Objekt 6 andererseits kann aus zwei Glaskeilen bestehen, die gegeneinander verschoben werden, so dass als Ergebnis eine Glasplatte veränderlicher Dicke entsteht, siehe hierzu Fig. 12.

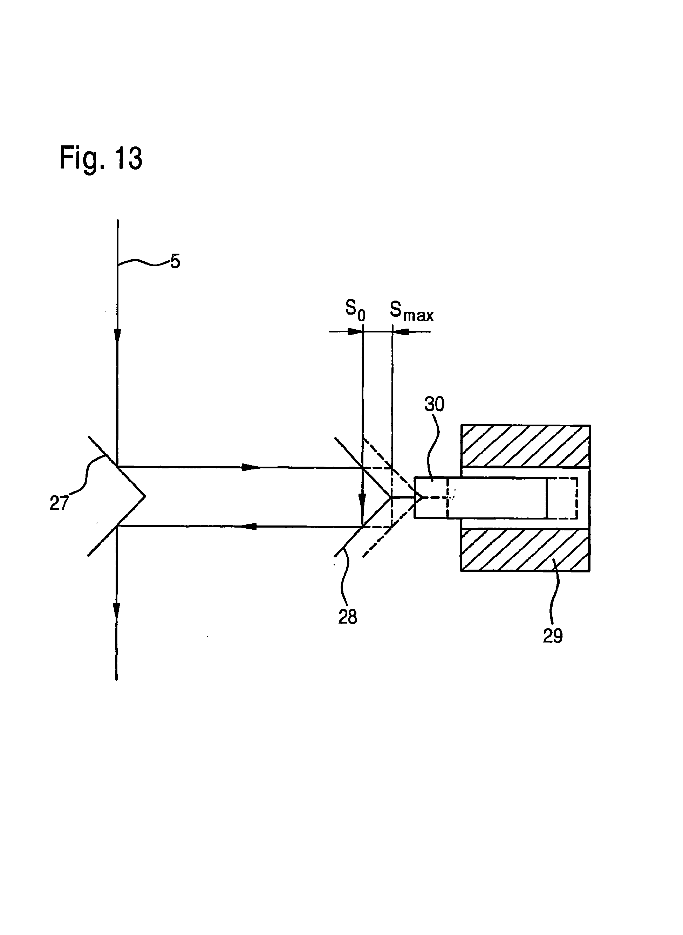

Die effektive Weglänge kann auch durch einen gefalteten Strahlengang und einen verfahrbaren Reflektor verändert werden. Vorteilhafterweise kann der Antrieb des Reflektors durch eine Tauchspule ähnlich wie bei einem Lautsprecher erfolgen, siehe hierzu Fig. 13.

Im Beobachtungsstrahlengang 7 ist zwischen der Blendenanordnung 3 und dem Bildempfänger 10 eine bewegliche Blende 12 vorgesehen, die in diesem Ausführungsbeispiel in möglichst geringem Abstand vor dem Bildempfänger 10 angeordnet ist. Wesentlich ist, dass diese Blende 12 in einer Ebene angeordnet ist, in der die Blendenanordnung 3 bzw. die Oberfläche des Bildempfängers 10 hinreichend scharf abgebildet wird.

Demnach könnte der Strahlengang nach der Blendenanordnung auch so gestaltet werden, dass eine weitere Bildebene für die Blendenanordnung entsteht, zusätzlich zu der ohnehin vorhandenen, in der der Bildempfänger 10 angeordnet ist. In diesem Fall könnte die Blende in dieser Bildebene angeordnet sein. Die Ausgestaltung und die Wirkungsweise dieser Blende wird später erläutert.

Eine alternative Anordnung der Abbildungsoptik im Beobachtungsstrahlengang ist durch Weglassen der Abbildungsoptik 9 und Hinzufügen der Abbildungsoptik 9' zwischen der beweglichen Blende 12 und dem Bildempfänger 10 möglich.

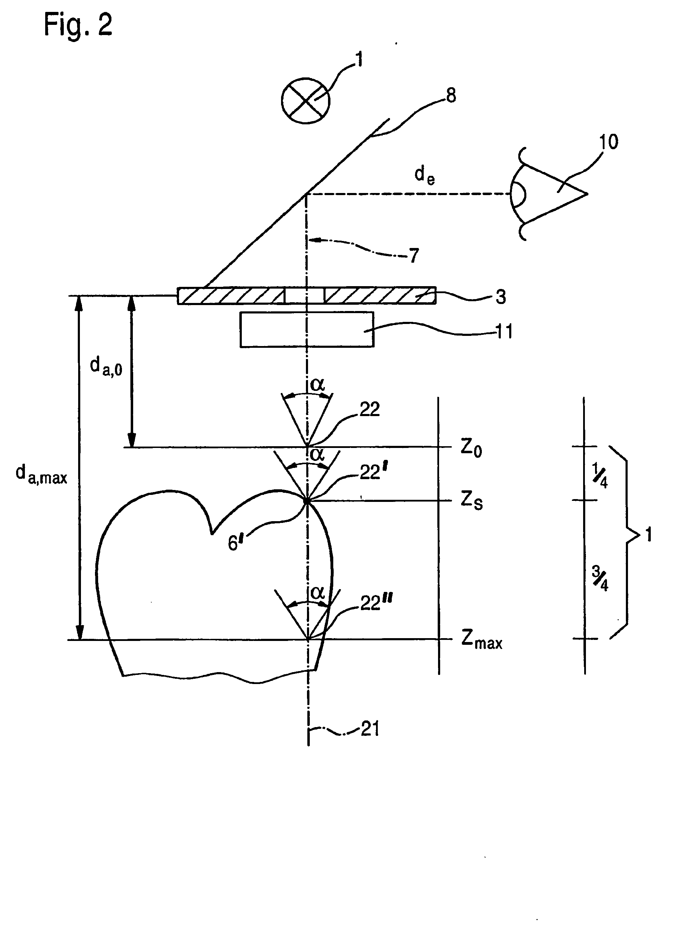

In **Fig. 2** ist das zugrunde liegende Vermessungsproblem anhand der Vermessung eines Objektpunktes 6' entlang einer Achse 21 dargestellt, auf der auch der Beobachtungsstrahlengang 7 bis zur Umlenkung am Strahlteiler 8 liegt. Das zu vermessende Objekt 6, hier ein Zahn, weist eine dreidimensionale Oberflächenkontur auf, welche als 3D-Modell nachgebildet werden soll. Bei einer zweidimensionalen Abbildung, wie sie ein gewöhnliches Videobild darstellt, erhält man zwar Informationen über die Gestaltung in x- und y-Richtung, die Höhenkoordinaten in z-Richtung bleiben jedoch unbekannt. Bei der Vermessung wird von der Lichtquelle 1 abgegebenes Licht so fokussiert, dass durch die Blendenanordnung 3 hindurchgetretenes Licht zu Beginn der Vermessung einen Fokuspunkt 22 eines Blendenlochs auf der Höhe z₀ bewirkt. Zwischen der Blendenanordnung 3 und dem Fokuspunkt 22 liegt dann ein Abstand d_{a,0} vor.

Der Lichtfleck weist einen Öffnungswinkel α/2 von 1° bis 15° auf.

Durch Verändern der optischen Weglänge zwischen der Abbildungsoptik 4 und dem Objekt 6 über Mittel 11 verschiebt sich der Fokuspunkt 22 solange, bis er im Objektpunkt 6' die Oberfläche des Objekts 6 auf der Höhe zₛ erreicht, welche hier etwa ein Viertel des Messbereichs entspricht. In dieser Lage fällt der Objektpunkt 6' mit dem Fokuspunkt 22' zusammen. Genau in dieser Stellung wird das vom Blendenloch ausgehende Licht maximal auf einen Punkt der Objektoberfläche gebündelt und das von dem Objektpunkt 6' zurückgestreute Licht optimal durch das Blendenloch nachgebildet, so dass genau in dieser Stellung der Bildempfänger für den zugeordneten Punkt ein Intensitätsmaximum wahrnimmt; dies entspricht dem Grundprinzip der konfokalen Mikroskopie.

Bei einem Abstand d_{a,max} ist das Bild des Blendenlochs auf dem Objekt 6 wiederum unscharf und daher erreicht sehr wenig Licht den Bildempfänger.

Bei der Vermessung wird ein Abtasten in z-Richtung dadurch bewirkt, dass die optische Weglänge verändert wird, was durch eine mechanische Verstellung der Abbildungsoptik oder durch eine Veränderung der optischen Dichte im Strahlengang oder durch andere im Stand der Technik bekannt Mittel geschehen kann. Diese Verstellung der optischen Weglänge geschieht während eines einzigen Belichtungszeitraums.

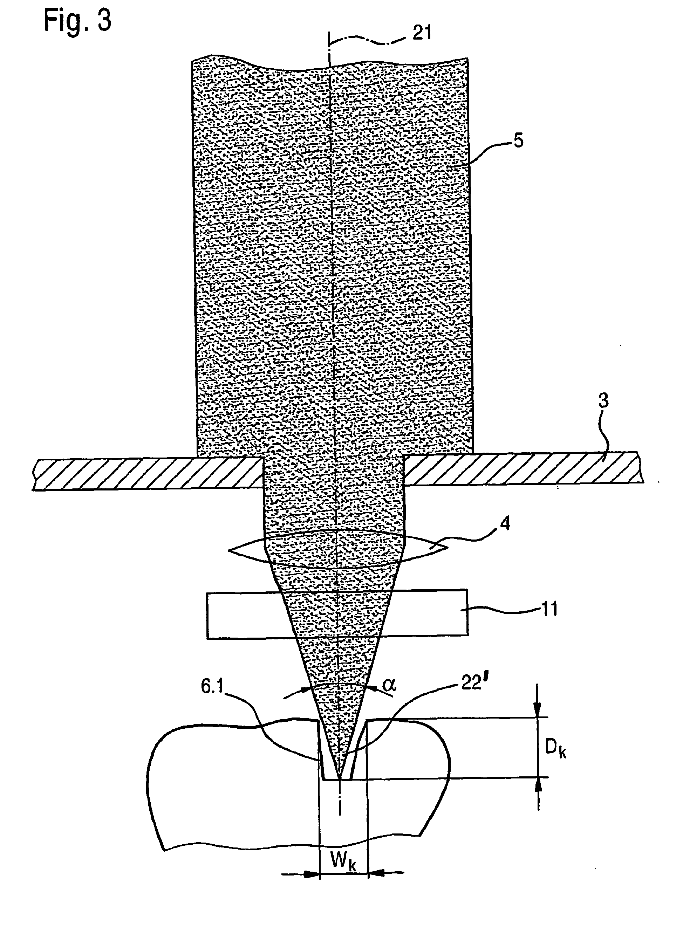

In **Fig. 3** ist zur Verdeutlichung des grundlegenden Vermessungsproblems anhand einer auf der Zahnoberfläche 6 befindlichen Vertiefung 6.1 dargestellt. Der durch die Öffnungsbreite der Blende 3 sowie durch die Brennweite der Abbildungsoptik 4 gegebene Winkel α darf, um eine möglichst gute Auflösung der Oberflächenstruktur zu erzielen, nicht zu groß sein. Damit ein Oberflächenpunkt 6', der sich in einer Vertiefung mit einer Breite W_{K} und einer Tiefe D_{K} vom Fokuspunkt 22' befindet, in voller Intensität beleuchtet wird, ist es notwendig, dass der Öffnungswinkel kleiner ist als der durch das geometrische Verhältnis von Breite zu Tiefe der Vertiefung gegebene Maximalwinkel.

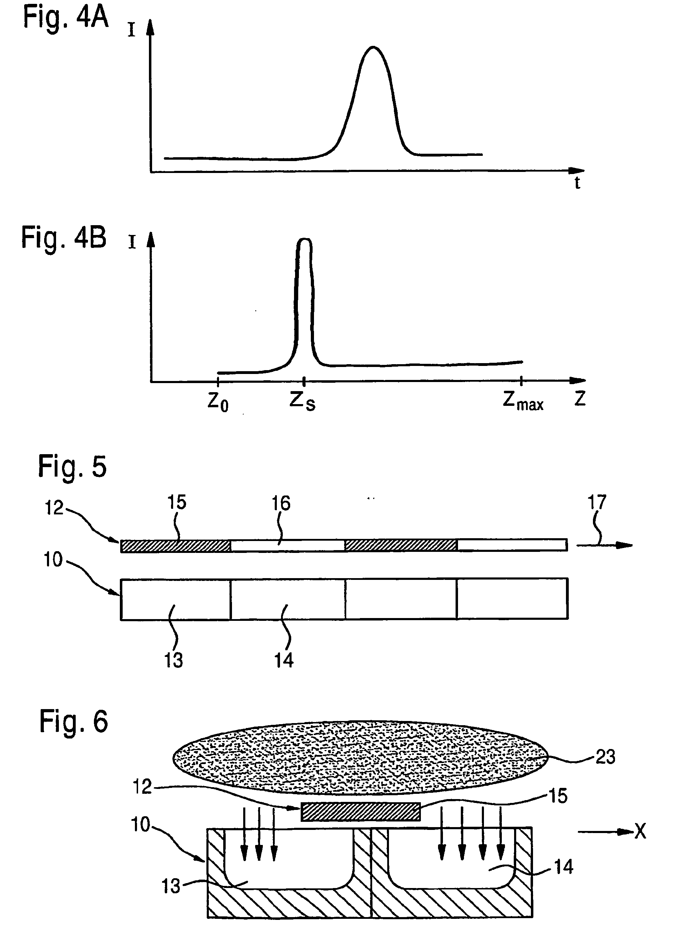

In **Fig. 4A** ist eine Intensitätsverteilung im Beobachtungsstrahlengang 7 zwischen Blendenanordnung 5 und Bildempfänger 10 gemäß Fig. 2 dargestellt. Im Bereich der Fokussierung an der Oberfläche des zu untersuchenden Objekts kommt es während des Belichtungszeitraums in der Höhe zₛ, hier nach etwa einem Viertel der Veränderung des optischen Abstandes, zu einem Intensitätsmaximum, welches als klar erkennbare Spitze ausgebildet ist. Es versteht sich von selbst, dass der optische Abstand nicht mit dem tatsächlichen Höhenbild linear übereinstimmen muss - das Endziel besteht hier darin, Höhenkoordinaten des zu vermessenden Objekts bereit zu stellen. Vorteilhaft ist es aber gleichwohl, wenn eine Linearisierung des Zusammenhangs zwischen der Lage der Blendenanordnung und der Lage des Fokuspunktes vorgenommen werden kann.

In **Fig. 4B** ist der Intensitätsverlauf des vom Objekt 6 zurückgestreuten Lichts des Beobachtungsstrahlenganges 7 in der Blendenanordnung 3 dargestellt. Die vertikale Achse entspricht der Intensität des Lichts, die horizontale Achse entspricht der Zeit t während des Belichtungszeitraumes T des Bildempfängers 10. Der Bildempfänger 10 wird dabei während des gesamtes Belichtungszeitraumes T belichtet, wobei der deutlich erkennbare Intensitätsanstieg genau dann auftritt, wenn der zugeordnete Objektpunkt 6' im scharfen Bereich der Abbildung durch die Abbildungsoptik liegt. Außerhalb dieses scharfen Bereichs sind die Intensitätswerte demgegenüber deutlich geringer, da der Lichtfleck am Objektpunkt 6' größer ist.

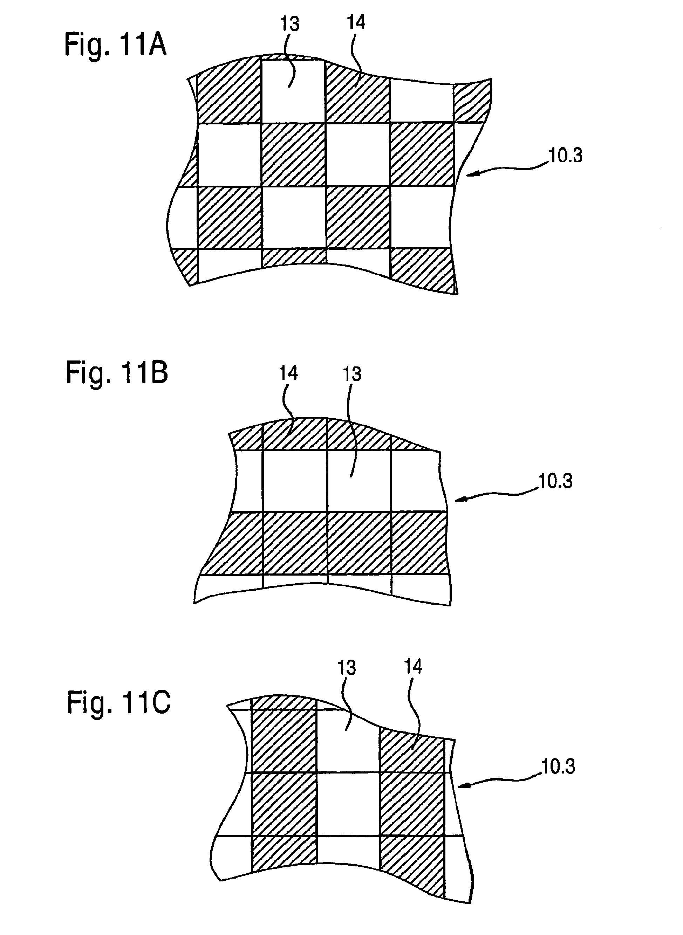

In **Fig. 5** ist ein Ausführungsbeispiel einer Blende 12 dargestellt, die unmittelbar benachbart zu einem Bildempfänger 10 angeordnet ist. Der Bildempfänger 10 weist mehrere strahlungsempfindliche Sensorelemente 13, 14 auf, die gemäß der Erfindung zusammenwirken. Die Blende 12 ist als Hell/Dunkel-Muster ausgebildet und verfügt somit über einen lichtundurchlässigen Bereich 15 und einen lichtdurchlässigen Bereich 16. Darüber hinaus ist die Blende 12 in Richtung des Pfeils 17 am Bildempfänger 10 und den Sensorelementen 13, 14 entlang bewegbar. Als Lochmuster für die Blende 12 kommen zum Beispiel Streifenmuster, aber auch ein Schachbrettmuster in Frage, wie bei Fig. 11A-C eingehend erläutert wird. Im Ausführungsbeispiel entspricht das Streifenmuster der Größe der Sensorelemente 13, 14; d.h., ein Streifen eines Streifenmuster hat die gleiche Breite wie die Sensorelemente 13, 14.

In der dargestellten Ausgangsstellung ist das Sensorelement 13 vollständig von dem lichtundurchlässigen Bereich 15 abgeschattet, wohingegen das zweite Sensorelement 14 ohne jede Abschattung ist. Auf die Sensorelemente 13, 14 gerichtetes Licht wird daher ausschließlich im Sensorelement 14 ein informationstragendes elektronisches Signal erzeugt.

In **Fig. 6** ist eine Prinzipskizze des Bildempfängers 10 mit den Sensorelementen 13, 14 gezeigt, wobei zum Zweck der Vereinfachung von der Blende 12 lediglich der lichtundurchlässige Bereich 15 dargestellt ist. Auf die benachbarten Sensorelemente 13, 14 fällt der Lichtfleck 23 als Abbild der im Beobachtungsstrahlengang angeordneten Blendenanordnung. Der Durchmesser des Lichtflecks 23 ist durch die Blendenanordnung vorgegeben und so bemessen, dass beide Sensorelemente 13, 14 vollständig überdeckt werden. Darüber hinaus wird angenommen, dass die Intensität des Lichts im Lichtfleck 23 über die gesamte Fläche konstant ist. Die Intensität selbst ist dabei durchaus zeitlich veränderlich, d.h. während eines bestimmten Belichtungszeitraumes T, während dessen auch eine Veränderung des optischen Weges stattfindet, kann sich die Intensität ändern. Ändert sie sich nicht, liegt der Messpunkt außerhalb des Messbereichs.

Es ist klar zu erkennen, dass der lichtundurchlässige Bereich 15 der Blende 12 in der gezeigten Stellung sowohl das Sensorelement 13 und 14 nur zum Teil abschattet, so dass in den Sensorelementen 13, 14 auch nur ein Bruchteil der Intensität des Lichtflecks 23 für die Signalerzeugung vorhanden ist.

Durch Verschieben der Blende 12 lässt sich der Anteil des

Lichts, der dem jeweiligen Sensorelement 13, 14 zugeführt wird, verändern.

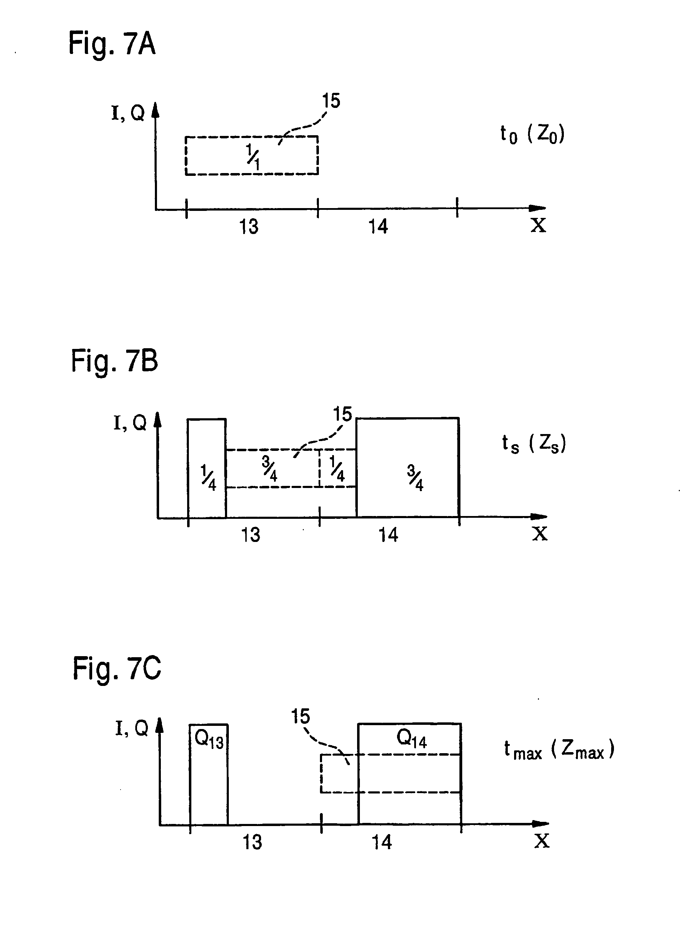

Ausgehend von dem in Fig. 4A dargestellten Intensitätsverlauf werden für verschiedene Stellungen der Blende 12 die in den Sensorelementen einfallende Intensität und die dadurch erzeugten Ladungen in den Fig. 7A bis C erläutert, wobei davon ausgegangen wird, dass sämtliche Störsignale wie Dunkelstrom, Rauschen sowie die Anteile der Intensität aus nicht scharfen Ebenen vernachlässigbar sind bzw. rechnerisch korrigiert werden können.

Da im Falle eines elektronischen Bildempfängers die Lichtquanten in elektrische Ladungen umgewandelt werden, wird hier ein Verlauf der Intensität in eine Raumachse der Sensorelemente, hier in x-Richung, zu verschiedenen Zeiten t bzw. durch Veränderung der optischen Weglänge hervorgerufenen Höhenkoordinate z dargestellt. In diese Richtung wird während des Belichtungszeitraums T auch die Blende bewegt, dargestellt als lichtundurchlässiger Bereich 15 in unterbrochenen Linien. Aufgetragen ist die aufsummierte Intensität I und die dadurch hervorgerufene elektrische Ladung Q über der Bewegungsrichtung der Blende.

Der Beginn eines Belichtungszeitraumes T zum Zeitpunkt t₀ ist in **Fig. 7A** dargestellt. Der lichtundurchlässige Bereich 15 der Blende 12 schattet das Sensorelement 13 über seine ganze Erstreckung in x-Richtung ab, das Sensorelement 14 ist hingegen über seine ganze Länge in x-Richtung ohne jegliche Abschattung. Da jedoch weder Dunkelstromanteil, Rauschanteil noch Anteile aus nicht scharfen Ebenen berücksichtigt werden, wird in diesem Anfangszustand weder in dem Sensorelement 13 noch in dem Sensorelement 14 Ladung akkumuliert.

In **Fig. 7B** wird die Situation zum Zeitpunkt tₛ des Auftreffens des Fokuspunkts auf die zu vermessende Oberfläche des Objekts mit einer Höhenkoordinate zₛ dargestellt. Der optische Weg wurde so verstellt, dass der Fokuspunkt 22' gemäß Fig. 2 gerade an der Oberfläche des zu untersuchenden Objekts 6 aus Fig. 2 liegt. Dadurch wird der in Fig. 4 dargestellte sprunghafte Anstieg in der Intensität hervorgerufen. Da jedoch der nicht durchlässige Bereich 15 der ebenfalls verstellten Blende die beiden Sensorelemente 13, 14 zu unterschiedlichen Teilen abdeckt, werden in den beiden Sensorelementen 13, 14 unterschiedliche Ladungen akkumuliert, zum besseren Verständnis dargestellt als Verhältnis ¼ und ¾, was dem umgekehrten Verhältnis der Abschattung von ¾ und ¼ entspricht. Da während der weiteren Belichtungszeit bis zum Ende des Belichtungszeitraumes T zum Zeitpunkt tₘₐₓ keine weitere Belichtung mehr stattfindet, verbleibt es in **Fig. 7C** bei den durch Belichtung gemäß Fig. 7B akkumulierten Ladung Q₁₃, Q₁₄ in den Sensorelementen 13, 14. Aus dem Unterschied und/oder dem Verhältnis der Ladung Q₁₃, Q₁₄ lässt sich der genaue Zeitpunkt der Belichtung der scharfen Schicht bestimmen. Aus der Bestimmung dieses Zeitpunktes lässt sich in Kenntnis der Veränderungen des optischen Wegs einerseits und der Bewegung der Blende 12 andererseits eine Höhenkoordinate zₛ rekonstruieren, die einen Punkt auf der Oberfläche des zu untersuchenden Objekts wiedergibt.

Selbst in dem Fall, dass keine idealen Verhältnisse vorliegen, ergibt sich aufgrund der hohen Intensität des Lichtflecks dann, wenn die Ebene, in der der Fokuspunkt 22 liegt, die Oberfläche des untersuchten Objekts erreicht, ein hinreichender Signalabstand, um die Auswertung zu ermöglichen.

Allgemein gilt, dass die Veränderung der optischen Weglänge im Strahlengang und die Veränderung der Empfindlichkeit und/oder der belichteten Fläche synchronisiert ist, wobei sich im einfachsten Fall eine Blende in der Zeit, in der der interessierende Höhenbereich durch die Veränderung der optischen Weglänge abgefahren wird, von der beschriebenen Ausgangsposition in die beschri ebene Endposition gebracht wird. Im einfachsten Fall ist dies auch genau die Belichtungszeit T für ein Bild des Bildempfänger.

Insbesondere bei der Verwendung von CCD-Sensoren oder CMOS-Sensoren findet eine Umwandlung von während des gesamten Belichtungszeitraumes auftretenden Lichtquanten in elektrische Ladung statt. Dabei ist für eine komplette Vermessung ein einziger Belichtungszeitraum ausreichend, wobei dieser die Zeitdauer von 500 ms und vorzugsweise von 200 ms nicht übersteigt, typischerweise aber bei 50 ms liegt. In diesem Zeitraum ist es noch möglich, eine freie oder abgestützte Aufnahme von Hand durchzuführen, wie dies bei Intraoralkameras gefordert wird. Aufgrund der besonderen Anforderungen ist bei Intraoralkameras ein Höhenmessbereich von 12 bis 20 mm zu fordern, ohne dass der Belichtungszeitraum zu lange wird oder die Genauigkeit leidet.

In den Figuren 6 und 7A bis C wird ein Paar von Sensorelementen 13, 14 betrachtet, auf welche das Licht aus einer Öffnung in der Blendenanordnung abgebildet wird. Unter Berücksichtigung des zeitlichen Intensitätsverlaufs hinter der Blendenanordnung, also beispielsweise der Lochrasterplatte, sind so die beiden Sensorelemente 13, 14 nahezu unbeleuchtet, bis auf einen kurzen Zeitraum, in dem der zugeordnete Punkt des zu vermessenden Objekts im scharfen Bereich liegt. Je nach Stellung der Blende und insbesondere des lichtundurchlässigen Bereichs 15 fällt diese Lichtmenge mehr auf das erste oder mehr auf das zweite Sensorelement 13,14 des Bildempfängers 10. Aus der auf die Sensorelementen 13, 14 einwirkenden Intensität kann damit auf den Zeitpunkt geschlossen werden, in dem der zugeordnete Objektpunkt scharf abgebildet wurde. Unter Verwendung der Eichdaten, die mit einer Eichung der Vermessungseinrichtung gewonnen wurden, ist dann dem Zeitpunkt ein Höhenwert zuzuordnen. Somit lässt sich die Höhe des vermessenden Objekts aus den Intensitäten in den beiden Sensorelementen 13, 14 als auszulesendes Bild des Bildempfängers zu berechnen.

Alternativ zu einer mechanisch bewegten Blende können auch entsprechend angesteuerte elektrische Mittel, z. B. ein LCD-Element, oder andere optische Bauelemente, die eine Veränderung der Lichtdurchlässigkeit zulassen, z.B. eine Kombination von entsprechend ausgestalteten Polarisationsfiltern, mit lichtundurchlässigen und lichtdurchlässigen Bereichen verwendlet werden.

Es ist weiterhin weder zwingend erforderlich, dass der strahlendurchlässige und der strahlenundurchlässige Bereich 15 der Blende 12 genau gleichgroß sind, noch müssen diese Bereiche exakt auf die Größe eines Sensorelements abgestimmt sein. Eine Vollabdeckung eines Sensorelements ist ebenso wenig erforderlich, da es nur darauf ankommt, eine eindeutige Wertverteilung zwischen den beiden Sensorelementen 13, 14 zu erhalten.

Grundsätzlich ist es sogar möglich, anstelle einzelner Sensorelemente mehrere Sensorelemente in Gruppen zu bündeln und nicht das Verhalten der einzelnen Sensorelemente untereinander zu betrachten, sondern das Verhalten der Gruppen.

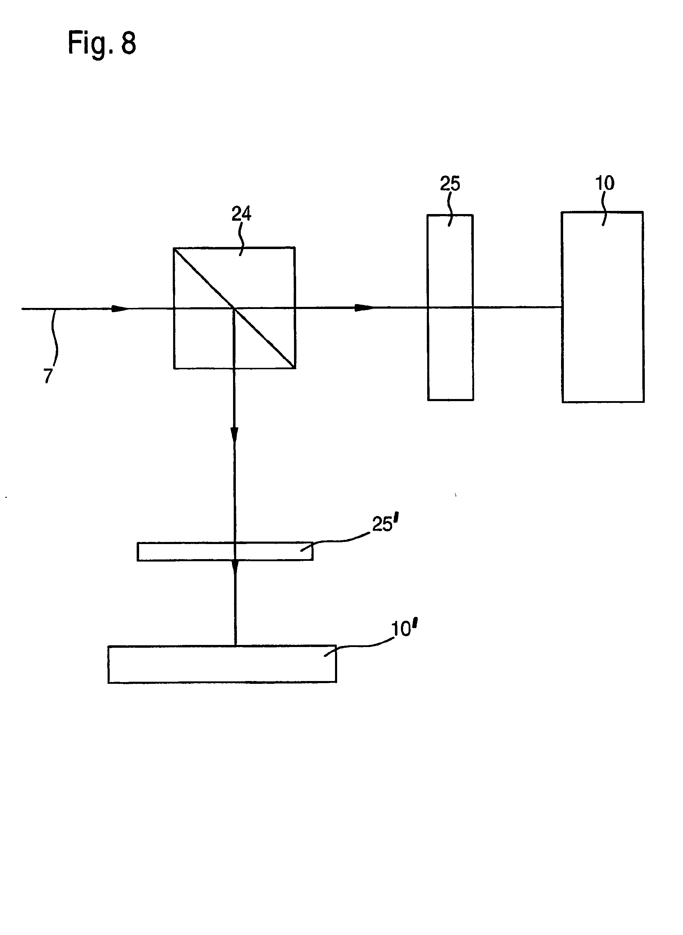

In **Fig. 8** ist eine Ausführungsform dargestellt, bei der das gleiche Bild mittels eines Strahlteilers 24 auf zwei getrennte Bildempfänger 10, 10' abgebildet wird. Die erfindungsgemäß benötigte zeitlich veränderliche Empfindlichkeit der räumlich getrennten Bildempfänger 10, 10' kann durch Abschattung mittels elektronischer oder optischer Hilfsmittel geschehen. Beispielhaft sind hier LCD-Elemente 25 und 25' vorgesehen, deren Lichtdurchlässigkeit sich auf elektrischem Wege verändern lässt. Diese Veränderung kann gegebenenfalls durch eine Recheneinheit gesteuert werden. Die Steuerung der LCD-Elemente 25 und 25' sieht vor, dass zur gleichen Zeit eine Zunahme der Abschattung des einen Sensorelements und eine Verringerung der Abschattung des anderen Sensorelements vorgenommen wird.

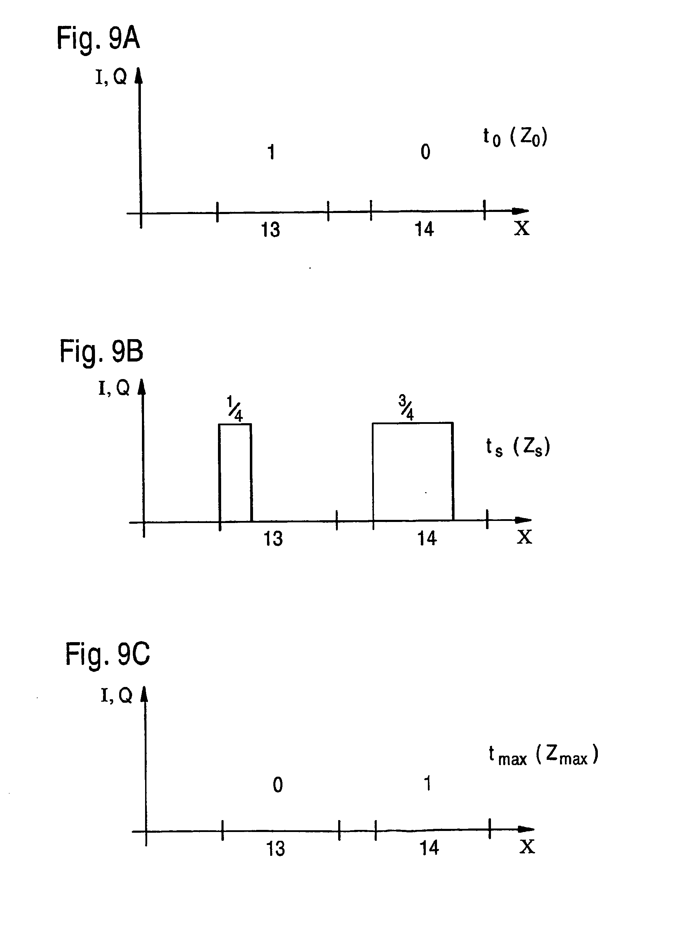

In den **Fig. 9A-C** sind die Beleuchtungsintensitäten zweier in Fig. 8 verwendeter Sensoren 10 und 10' mit Sensorelementen 13, 14, die sich auf getrennten Sensoren befinden, dargestellt.

**Fig. 9A** zeigt zu einem Zeitpunkt t₀ eine vollständig lichtdurchlässige Blende vor Sensorelement 13 und eine vollständig lichtundurchlässige Blende vor Sensorelement 14. Da, wie in Fig. 2 dargestellt, zum Zeitpunkt t₀ der Fokuspunkt 22 nicht mit dem Oberflächenpunkt 6' des Objekts 6 zusammenfällt, wird nur sehr wenig Lichtintensität auf das Sensorelement 13 fallen und nur sehr wenig Ladung akkumuliert, die in der Auswertung ohne Belang ist, wie bei Fig.7A bereits erläutert.

**Fig. 9B** zeigt den Zeitpunkt tₛ, zu dem der Fokuspunkt mit dem Objektpunkt zusammenfällt. Die Blenden schatten zu diesem Zeitpunkt das eine Sensorelement zu einem bestimmten Grad ab und das andere Sensorelement zu einem dazu entgegengesetzten Grad, hier zur Verdeutlichung als Verhältnis ¼ zu ¾ dargestellt. Da zu diesem Zeitpunkt die größte Lichtmenge reflektiert wird, ist die Lichtintensität an den Sensorelementen 13, 14 am größten.

**Fig. 9C** zeigt das Intensitätsverhältnis zu einem späteren Zeitpunkt tₘₐₓ, an dem im Gegensatz zu Fig. 9A das Sensorelement 13 vollständig abgeschattet ist und dem SensoreLement 14 die volle Lichtintensität zugeführt wird. Diese Lichtintensität ist aber, wie bereits in Fig. 9A an Sensorelement 13, viel geringer als zum Zeitpunkt tₛ.

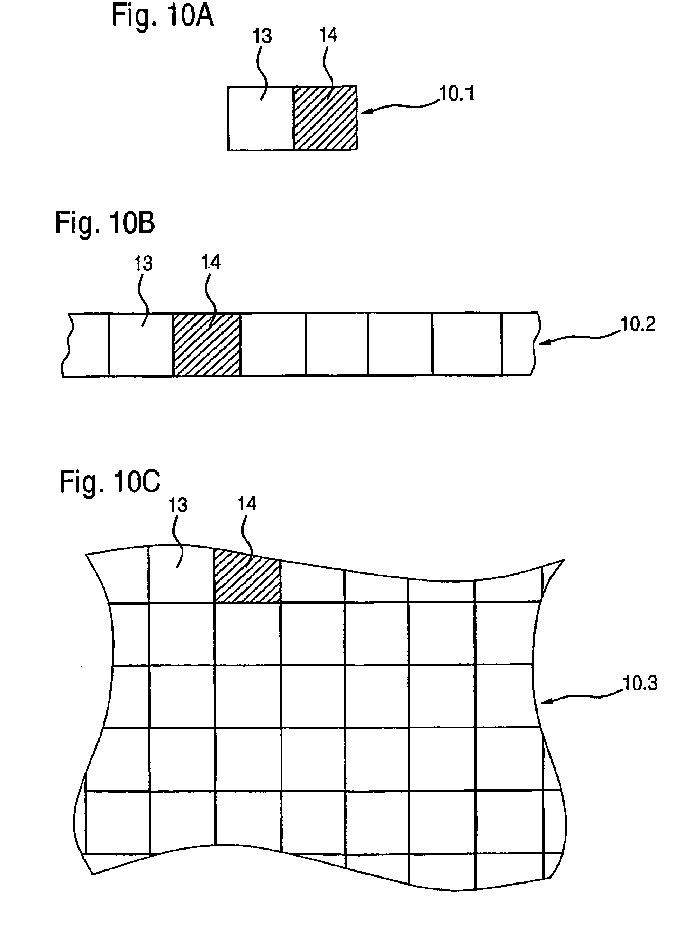

Die **Fig. 10A-C** zeigen verschiedene mögliche Geometrien von Bildempfängern. Die Bildempfänger können dabei jeweils in unterschiedlichen Techniken ausgeführt sein, so zum Beispiel als CCD- oder CMOS-Sensoren.

Der in **Fig. 10A** dargestellte Bildempfänger 10.1 zeigt den einfachst möglichen Fall eines Punktsensors mit zwei Sensorelementen 13, 14.

In **Fig. 10B** ist ein Ausschnitt aus einem Bildempfänger 10.2 bestehend aus einer Zeile mit Punktsensoren 13, 14 dargestellt.

**Fig. 10C** zeigt einen für eine 3D-Aufnahme bei einmaliger Belichtung notwendigen flächenhaften Bildempfänger 10-3. Die Sensorelemente 13, 14 können hier in verschiedener Weise angeordnet sein.

Die **Fig. 11A-C** zeigen bei einem wie in Fig. 10C dargestellten flächenhaften Bildempfänger 10.3 verschiedene Anordnungsmöglichkeiten der Sensorelemente 13, 14. Die Ausgestaltung der beweglichen Blende 12 ist an die Anordnung der Sensorelementpaare anzupassen.

In **Fig. 11A** sind die Sensorelementgruppen schachbrettartig über die Fläche verteilt. Die lichtdurchlässigen Bereiche der beweglichen Blende müssen hier ebenfalls schachbrettartig gestaltet sein.

**Fig. 11B** zeigt eine zeilenartige Anordnung entsprechender Sensorelementgruppen, bei der die zusammenwirkenden Sensoren 13, 14 untereinander angeordnet sind.

**Fig. 11C** unterscheidet sich von Fig. 11B nur durch die spalten- statt zeilenförmige Anordnung der Sensorelementgruppen. Hier wie auch in Fig. 11B ist die Blende eine entsprechend ausgerichtete Streifenblende.

In **Fig. 12A-B** wird eine Ausführungsform des Mittels zum Verstellen der optischen Weglänge 11 vorgeschlagen. Zwei Glaskeile 26 und 26' sind gegeneinander verschiebbar in der Strahlachse 21 angeordnet. Dabei ist die effektive Dicke S bei entsprechender Verschiebung der Keile veränderbar. Die Veränderung der optischen Weglänge d zwischen der Blendenanordnung 3 und der Bildebene wird innerhalb der effektiven Dicke S durch die durch die Brechung des Lichts an der Oberfläche hervorgerufene Änderung des Öffnungswinkels des Lichtkegels erreicht, sodass, je nach optischer Dichte der Keile, eine Verlängerung oder Verkürzung bezüglich der Brennweite der Abbildungsoptik 4 erzielt wird.

**Fig. 12A** zeigt dabei die Keile 26, 26' mit einer geringen effektiven Dicke S₀, wie sie zu einem Zeitpunkt t₀ vorliegt.

**Fig. 12B** zeigt demgegenüber eine Position der beiden Glaskeile 26 und 26', bei der diese eine maximale Dicke Sₘₐₓ erreichen.

Der Bildempfänger 10 hat eine Belichtungszeit T für ein Bild bestehend aus n x m Pixeln. Der Bildempfänger 10 ist so ausgeführt, dass jedem Punkt der Blendenanordnung 3 durch die Empfängeroptik 9 und gegebenenfalls zusätzlichen Elementen mindestens zwei Sensorelemente 13, 14 zugeordnet sind. Logisch betrachtet besteht der Bildempfänger 10 somit aus zwei n/2 x m-Matrizen von Sensorelementen mit einer Belichtungszeit T zur Erlangung einer Bildinformation. Weiterhin verfügt der Bildempfänger 10 über Mittel, die es erlauben, in der Zeit T die Empfindlichkeit der einen Sensorelementmatrix kontinuierlich zu verringern, z.B. von einem Maximalwert auf Null und die der anderen Sensorelementmatrix zu erhöhen, z.B. von Null auf einen Maximalwert.

Die Ausführung des Bildempfängers 10 gemäß Fig. 8 besteht aus einem Strahlteiler 24 und zwei elektronischen Bildsensoren 10, 10', die z.B. als CCD- oder CMOS-Sensoren ausgeführt sein können. Dabei bilden die Pixelmatrizen der beiden Bildsensoren 10,10' die vorher beschrieben zwei n/2 x m Pixelmatrizen, auf die das gleiche Bild abgebildet wird. Beide Sensoren 10, 10' beinhalten Mittel zur Variation der Empfindlichkeit 25, 25', z.B. LCD-Platten, die im Beobachtungsstrahlengang 7 zwischen Strahlteiler 8 und Bildsensor 10 stehen. Alternativ zu den LCD-Platten kann die Empfindlichkeit auch direkt durch elektronische Mittel an den Bildsensoren verändert werden, sofern die verwendete Sensortechnik dies erlaubt.

In der typischen Anwendung zur flächenhaften Höhenvermessung von Objekten, mit Sensorelementanordnungen wie in Fig. 11B bzw. 11C beschrieben, bei typischen Werten von n = 500, m = 500, ist die Blende 12 als Streifenmuster ausgebildet. Alternativ zu einer mechanisch bewegten Blende kann auch ein LCD-Streifenmuster verwendet werden bei dem benachbarte Streifen vor zusammenwirkenden Sensorelementen liegen und diese in ihrer Empfindlichkeit gezielt verändern.

In **Fig. 13** ist die Veränderung des optischen Wegs mittels zweier Reflektoren 27 und 28 vorgesehen, wobei der Reflektor 27 abbildungsgemäß feststehen soll und der Reflektor 28 mit der Rückseite an einen zu einer Tauchspule 29 gehörenden Magneten 30 befestigt ist. Diese Tauchspulen sind aus dem Stand der Technik, beispielsweise aus dem Lautsprecherbau, bekannt und bedürfen daher keiner weiteren Erläuterung. Dargestellt sind zwei Positionen von Reflektor 28 und

Magnet 30, wobei die gestrichelt dargestellte Position einer Verlängerung des optischen Weges um 2 x Sₘₐₓ bezüglich der durchgezogen dargestellten Position entspricht.

Vorteilhafterweise wird die Vermessungseinrichtung so eingesetzt, dass die Bildempfänger 10 Flächensensoren sind und die Höhenvermessung des Objekts in der Belichtungszeit T des Bildempfängers durchgeführt wird. Es ist jedoch auch möglich, statt mit Flächensensoren mit Zeilensensoren zu arbeiten und ein Objekt zeilenweise abzutasten. Es ist grundsätzlich möglich, nicht den kompletten Höhenmessbereich während einer Belichtungsperiode T zu durchfahren, sondern die Vermessung auf mehrere aufeinanderfolgende Belichtungsperioden aufzuteilen.

### Bezugszeichenliste

- 1: Lichtquelle
- 2: Abbildungsoptik
- 3: Blendenanordnung
- 4: Abbildungsoptik
- 5: Lichtstrahl
- 6: Objekt
- 6': Objektpunkt
- 6.1: Vertiefung
- 7: Beobachtungsstrahlengang
- 8: Umlenkmittel
- 9: Empfängeroptik
- 9': Abbildungsoptik
- 10: Bildempfänger
- 10': Bildempfänger
- 10.1: Bildempfänger, ausgebildet als Punktsensor
- 10.2: Bildempfänger, ausgebildet als Zeilensensor
- 10.3: Bildempfänger, ausgebildet als Flächensensor
- 11: Mittel zur Veränderung d. optischen Weglänge
- 12: bewegliche Blende
- 13: Sensorelement
- 14: Sensorelement
- 15: dunkler Blendenbereich
- 16: heller Blendenbereich
- 17: Bewegungsrichtung der Blende
- 21: Achse
- 22: Fokuspunkt; 22', 22" in verschiedenen Lagen
- 23: Lichtfleck
- 24: Strahlteiler
- 25: Mittel mit veränderlicher Lichtdurchlässigkeit
- 25': Mittel mit veränderlicher Lichtdurchlässigkeit
- 26: Glaskeil
- 26': Glaskeil
- 27: Reflektor
- 28: verfahrbarer Reflektor mit Magnet
- 29: Tauchspule

## Patentansprüche

1. Vermessungseinrichtung nach dem Grundprinzip der konfokalen Mikroskopie, umfassend eine Lichtquelle (1), eine konfokale Blendenanordnung (3), eine Abbildungsoptik (4) zur Fokussierung des von der Lichtquelle (1) abgestrahltenLichts (5) auf ein zu vermessendes Objekt (6), weiterhin umfassend einen Bildempfänger (10) für das am Objekt (6) zurückgestreute und durch dieselbe Abbildungsoptik (4) hindurchgetretene Licht (7) eines Objektpunktes (6') mit mindestens zwei strahlungsempfindlichen Sensorelementen (13, 14), wobei die Vermessungseinrichtung Mittel (11) umfasst, die zur Veränderung der optischen Weglänge (d) im Strahlengang zwischen der konfokalen Blendenanordnung (3) und dem Objekt (6) angeordnet sind, wobei der optische Abstand (d) der Bildebene von der Abbildungsoptik (4) in vorgegebener Weise veränderbar ist, **dadurch gekennzeichnet,**
- **dass** einem durch die Abbildungsoptiken (4, 9) bestrahlten Objektpunkt (6') mindestens zwei Sensorelemente (13, 14) zugeordnet sind, wenn der bestrahlte Objektpunkt (6') im scharfen Bereich der Abbildung durch die Abbildungsoptik (4) liegt,
- **dass** Mittel (12, 25, 25') zur Veränderung der Empfindlichkeit und/oder der beleuchteten Fläche der strahlungsempfindlichen Sensorelementen (13, 14) vorgesehen sind, die die Abhängigkeit der Akkumulation von Ladungen (Q₁₃, Q₁₄) in den mindestens zwei Sensorelementen (13, 14) von der Lichtintensität des Beobachtungsstrahlenganges (7) während eines Belichtungszeitraums (T) derart beeinflussen, dass aus deren elektronischem Signal ein Zusammenhang mit dem optischen Abstand (d) der Bildebene von der Abbildungsoptik (4) hergestellt ist, so dass aus der Verteilung der aus den mindestens zwei Sensorelementen (13, 14) während des genannten Belichtungszeitraumes (T) akkumulierte Ladungen gewonnenen Signale eine Höhenkoordinate (zₛ) des Objekts (6) rekonstruierbar ist, indem es einen Rechner zur Auswertung zugeführt ist.

2. Vermessungseinrichtung nach Anspruch 1, **dadurch gekennzeichnet, dass** die Mittel zur Beeinflussung der Akkumulation die Empfindlichkeit der Sensorelemente (13, 14) und/oder die Lichtdurchlässigkeit im Beobachtungsstrahlengang (7) zwischen der Abbildungsoptik (4) und dem Bildempfänger (10), insbesondere die belichtete Fläche der mindestens zwei Sensorelemente (13,14), verändern.

3. Vermessungseinrichtung nach Anspruch 1 oder 2, **dadurch gekennzeichnet, dass** eine Blendenanordnung (3) zur Erzeugung einer Helligkeitsverteilung am Objekt (6) vorgesehen ist.

4. Vermessungseinrichtung nach Anspruch 3, **dadurch gekennzeichnet, dass** mit der Blendenanordnung (3) mehrere Objektpunkte (6') erfasst werden können, wobei mindestens so viele Gruppen von Sensorelementen (13, 14) vorgesehen sind, wie Objektpunkte (6') erfasst werden sollen.

5. Vermessungseinrichtung nach einem der Ansprüche 1 bis 4, **dadurch gekennzeichnet, dass** im Beobachtungsstrahlengang (7) zwischen Objekt (6) und Empfänger (10) Mittel zum Umlenken (8) des Beobachtungsstrahlengangs (7) angeordnet sind.

6. Vermessungseinrichtung nach Anspruch 5, **dadurch gekennzeichnet, dass** das Umlenkmittel (8) ein Strahlteiler ist.

7. Vermessungseinrichtung nach Anspruch 5 oder 6, **dadurch gekennzeichnet, dass** das Umlenkmittel (8) zwischen Abbildungsoptik (4) und Lichtquelle (1) angeordnet ist.

8. Vermessungseinrichtung nach Anspruch 3 oder 4 in Verbindung mit Anspruch 5 oder 6, **dadurch gekennzeichnet, dass** das Umlenkmittel (8) zwischen der Blendenanordnung (3) und der Lichtquelle (1) angeordnet ist.

9. Vermessungseinrichtung nach Anspruch 3, **dadurch gekennzeichnet, dass** im Beobachtungsstrahlengang (7) zwischen der Blendenanordnung (3) und den Sensorelementen (13, 14) eine bewegliche Blende (12) vorgesehen ist, die in Abhängigkeit des Verschiebewegs die Sensorelemente (13, 14) zumindest teilweise abschattet.

10. Vermessungseinrichtung nach Anspruch 9, **dadurch gekennzeichnet, dass** die Blende (12) so ausgebildet ist, dass eine Verschiebung der Blende (12) eine Verringerung der Abschattung des mindestens einen Sensorelements (13) eine Erhöhung der Abschattung des mindestens einen anderen Sensorelements (14) bewirkt.

11. Vermessungseinrichtung nach Anspruch 9 oder 10, **dadurch gekennzeichnet, dass** die Blende (12) in einer Anfangsposition einen Teil der Sensorelemente (13) vollständig abschattet und in einer Endposition einen anderen Teil der Sensorelemente (14) vollständig abschattet und in einer Zwischenposition sowohl einen Teil der einen Sensorelemente (13) als auch einen Teil der anderen Sensorelemente (14) abschattet.

12. Vermessungseinrichtung nach einem der Ansprüche 2 und 9 bis 11, **dadurch gekennzeichnet, dass** der Grad der Abschattung des einen Teils der Sensorelements (13) dem Grad der belichteten Fläche des anderen Teils der Sensorelements (14) entspricht.

13. Vermessungseinrichtung nach einem der Ansprüche 2 bis 8, **dadurch gekennzeichnet, dass** das Mittel zur Beeinflussung der Akkumulation ein elektronisch gesteuertes optisches Element (25) veränderbarer Lichtdurchlässigkeit ist, insbesondere ein LCD-Element.

14. Vermessungseinrichtung nach einem der Ansprüche 3 bis 13, **dadurch gekennzeichnet, dass** die Blendenanordnung (3) zur zweidimensionalen Abtastung des Objekts (6) ausgebildet ist.

15. Vermessungseinrichtung nach Anspruch 14, **dadurch gekennzeichnet, dass** Verstellmittel vorgesehen sind, um die Blendenanordnung (3) so zu verstellen, dass auch wegen des Tastverhältnisses der Blendenanordnung (3) in einer ersten Messung nicht abgebildete Bereiche in einer zweiten Messung erfasst werden.

16. Vermessungseinrichtung nach einem der Ansprüche 1 bis 14, **dadurch gekennzeichnet, dass** der Bildempfänger (10) ein Zeilensensor (10.2) ist.

17. Vermessungseinrichtung nach einem der Ansprüche 1 bis 14, **dadurch gekennzeichnet, dass** der Bildempfänger (10) ein Flächensensor (10.3) ist.

18. Vermessungseinrichtung nach einem der Ansprüche 1 bis 17, **dadurch gekennzeichnet, dass** der Bildempfänger (10) als CCD-Sensor ausgeführt ist.

19. Vermessungseinrichtung nach einem der Ansprüche 1 bis 17, **dadurch gekennzeichnet, dass** der Bildempfänger (10) als CMOS-Sensor ausgebildet ist.

20. Vermessungseinrichtung nach einem der Ansprüche 1 bis 11, **dadurch gekennzeichnet, dass** die Sensorelemente (13, 14) auf getrennten Bildempfängern (10, 10') angeordnet sind und ein im Beobachtungsstrahlengang angeordneter Strahlteiler (24) vorgesehen ist, der das gleiche Bild an den zweiten Bildempfänger (10') übermittelt, wobei zwischen den beiden Bildempfängern (10, 10') mittels elektronischer und/oder optischer Hilfsmittel während des Belichtungszeitraums (T) übergeblendet wird.

21. Vermessungsanordnung nach einem der Ansprüche 1 bis 12, **dadurch gekennzeichnet, dass** mindestens zwei Sensorelemente verwendet werden (13, 14) und die Empfindlichkeit dieser mit zunehmendem Verstellweg in dem einen Teil der Sensorelemente (13) zunimmt und in dem anderen Teil der Sensorelemente (14) abnimmt.

22. Vermessungsanordnung nach einem der Ansprüche 1 bis 20, **dadurch gekennzeichnet, dass** der mittlere Tastabstand der Blendenanordnung (3) der gewünschten Messgenauigkeit entspricht.

23. Verfahren zur Vermessung nach dem Grundprinzip der konfokalen Mikroskopie, bei dem aus einer Lichtquelle (1) Licht (5) über eine konfokale Blendenanordnung (3) auf ein zu vermessendes Objekt (6) abgestrahlt wird, wobei das Licht (5) über eine Abbildungsoptik (4) fokussiert wird, und bei dem weiterhin das am Objekt (6) zurückgestreute und durch dieselbe Abbildungsoptik (4) hindurchgetretene Licht (7) eines Objektpunkts (6') mittels eines Bildempfängers (10) mit mindestens zwei strahlungsempfindlichen Sensorelementen (13, 14) empfangen wird, wobei der optische Abstand (d) der Bildebene von der Abbildungsoptik (4) in vorgegebener Weise über Mittel (11), die im Strahlengang zwischen der konfokalen Blendenanordnung (3) und dem Objekt (6) angeordnet sind, während des Belichtungszeitraums (T) verändert wird, **dadurch gekennzeichnet,**
- **dass** einem bestrahlten Objektpunkt durch die Abbildungsoptiken (4, 9) mindestens zwei Sensorelemente (13, 14) zugeordnet sind, wenn der bestrahlte Objektpunkt (6') im scharfen Bereich der Abbildung durch die Abbildungsoptik (4) liegt;
- **dass** die Abhängigkeit der Akkumulation von in den mindestens zwei Sensorelementen (13, 14) erzeugten Ladungen (Q₁₃, Q₁₄) von der Lichtintensität im Beobachtungsstrahlengang (7) über Mittel (12, 15, 25') zur Veränderung der Empfindlichkeit und/oder der beleuchteten Fläche der strahlungsempfindlichen Sensorelementen (13, 14) so verändert wird, dass aus deren elektronischem Signal ein Zusammenhang zwischen der Akkumulation und dem optischen Abstand (d) der Bildebene von der Abbildungsoptik (4) hergestellt ist, sodass aus der Verteilung der aus den mindestens zwei Sensorelementen (13, 14) während eines Belichtungszeitraumes (T) akkumulierten Ladungen eine Höhenkoordinate (zₛ) des Objekts (6) rekonstruierbar ist.

## Claims

1. A scanning system based on the principle of confocal microscopy, comprising a light source (1), a confocal aperture array (3), imaging optics (4) for focusing the light (5) radiated from the light source (1) onto an object (6) to be scanned, further comprising an image detector (10) comprising at least two radiation-sensitive sensor elements (13, 14) for the detection of the light (7) of an object spot (6'), which has been backscattered from the object (6) and has passed through the same imaging optics (4), wherein said scanning system has means (11) disposed in the optical path between said confocal aperture array (3) and said object (6) for varying the optical path length (d) such that the optical distance (d) of the image plane from said imaging optics (4) can be varied in a specified manner, **characterized in that**
- at least two sensor elements (13, 14) are assigned to an object spot (6') irradiated via said imaging optics (4, 9) when said irradiated object spot (6') is in the sharp area of the image produced through said imaging optics (4),
- means (12, 25, 25') are provided for varying the sensitivity and/or the illuminated area of the radiation-sensitive sensor elements (13, 14), which means (12, 25, 25') influence the dependence of the accumulation of charges (Q₁₃, Q₁₄) in the at least two sensor elements (13, 14) on the intensity of the light in the observation beam path (7) during an exposure period (T) in such a manner that the electronic signal generated by said sensor elements (13, 14) correlates with the optical distance (d) of said image plane from said imaging optics (4) such that from the distribution of the signals obtained from the charges that accumulate in the at least two sensor elements (13, 14) during said exposure period (T) a height coordinate (zₛ) of said object (6) can be reconstructed by transmitting said signal to a computer for evaluation thereof.

2. The scanning system as defined in claim 1, **characterized in that** said means for influencing the accumulation vary the sensitivity of the sensor elements (13, 14) and/or the transparency in the observation beam path (7) between said imaging optics (4) and said image detector (10), particularly the exposed area of the at least two sensor elements (13, 14).

3. The scanning system as defined in claim 1 or claim 2, **characterized in that** an aperture array (3) is provided for the production of a brightness distribution across said object (6).

4. The scanning system as defined in claim 3, **characterized in that** a plurality of object spots (6') can be recorded with said aperture array (3), in which case at least as many groups of sensor elements (13, 14) are provided as there are object spots (6') to be recorded.

5. The scanning system as defined in any one of claims 1 to 4, **characterized in that** in said observation beam path (7) between said object (6) and said detector (10) there is disposed a deflection device (8) for deflecting the observation beam path (7).

6. The scanning system as defined in claim 5, **characterized in that** said deflection device (8) is a beam splitter.

7. The scanning system as defined in claim 5 or claim 6, **characterized in that** said deflection device (8) is disposed between said imaging optics (4) and said light source (1).

8. The scanning system as defined in claim 3 or claim 4 in conjunction with claim 5 or claim 6, **characterized in that** said deflection device (8) is disposed between said aperture array (3) and said light source (1).

9. The scanning system as defined in claim 3, **characterized in that** in said observation beam path (7) there is provided between said aperture array (3) and said sensor elements (13, 14) a displaceable diaphragm (12), which at least partially shades said sensor elements (13, 14) according to the degree of displacement thereof.

10. The scanning system as defined in claim 9, **characterized in that** said diaphragm (12) is configured such that displacement of the diaphragm (12) causes a reduction of the shadowing effect on at least one sensor element (13) and an increase in the shadowing effect on at least one other sensor element (14).

11. The scanning system as defined in claim 9 or claim 10, **characterized in that** said diaphragm (12) completely shades one part of said sensor elements (13) in an initial position and completely shades one other part of said sensor elements (14) in an end position and shades both a part of one of said sensor elements (13) and a part of another of said sensor elements (14) in an intermediate position.

12. The scanning system as defined in any one of claims 2 and claims 9 to 11, **characterized in that** the degree of shadowing of one part of said sensor element (13) corresponds to the degree of exposed area of the other part of said sensor element (14).

13. The scanning system as defined in any one of claims 2 to 8, **characterized in that** said means for influencing the accumulation is an electronically controlled optical element (25) displaying variable transparency, in particular an LCD element.

14. The scanning system as defined in any one of claims 3 to 13, **characterized in that** said aperture array (3) is adapted to effect two-dimensional scanning of the object (6).

15. The scanning system as defined in claim 14, **characterized in that** regulating means are provided to adjust said aperture array (3) in such a manner that regions not detected on account of the pulse duty ratio of said aperture array (3) during a first measurement are detected during a second measurement.

16. The scanning system as defined in any one of claims 1 to 14, **characterized in that** said image detector (10) is a line sensor (10.2).

17. The scanning system as defined in any one of claims 1 to 14, **characterized in that** said image detector (10) is a flat panel sensor (10.3).

18. The scanning system as defined in any one of claims 1 to 17, **characterized in that** said image detector (10) is configured as a CCD sensor.

19. The scanning system as defined in any one of claims 1 to 17, **characterized in that** said image detector (10) is configured as a CMOS sensor.

20. The scanning system as defined in any one of claims 1 to 11, **characterized in that** said sensor elements (13, 14) are disposed on separated image detectors (10, 10') and a beam splitter (24) disposed in the observation beam path is provided which transfers the same image to said second image detector (10'), switching between the two image detectors (10, 10') being carried out during the exposure period (T) using electronic and/or optical auxiliary means.

21. The scanning configuration as defined in any one of claims 1 to 12, **characterized in that** at least two sensor elements (13, 14) are used and, as regulation progresses, the sensitivity of said elements increases in one part of said sensor elements (13) and decreases in the other part of said sensor elements (14).

22. The scanning configuration as defined in any one of claims 1 to 20, **characterized in that** the average scanning interval of said aperture array (3) corresponds to the desired accuracy of measurement.

23. A scanning method based on the principle of confocal microscopy, in which light (5) is radiated from a light source (1) through a confocal aperture array (3) onto an object (6) to be scanned, which light (5) is focussed through imaging optics (4), and in which, further, the light (7) of an object spot (6') that is backscattered from the object (6) so as to pass through the same imaging optics (4) is received by an image detector (10) having at least two radiation-sensitive sensor elements (13, 14), wherein the optical distance (d) of the image plane from the imaging optics (4) being varied during the exposure period (T) in a specified manner via means (11) disposed in the optical path between the confocal aperture array (3) and the object (6), **characterized in that**
- at least two sensor elements (13, 14) are assigned to an object spot irradiated through said imaging optics (4, 9) when said irradiated object spot (6') is in the sharp area of the image produced by said imaging optics (4), and
- the dependence of the accumulation of charges (Q₁₃, Q₁₄) produced in the at least two sensor elements (13, 14) on the intensity of the light in the observation beam path (7) is varied during an exposure period (T) by means (12, 25, 25') for altering the sensitivity and/or the illuminated area of said radiation-sensitive sensor elements (13, 14) in such a manner that the electronic signal generated thereby correlates with the optical distance (d) of the image plane from said imaging optics (4) such that from the distribution of the charges accumulated from the at least two sensor elements (13, 14) during an exposure period (T) a height coordinate (zₛ) of said object (6) can be reconstructed.

## Revendications

1. Dispositif de mesurage selon le principe de base de la microscopie confocale, comprenant une source lumineuse (1), un agencement confocal de diaphragmes (3), une optique de reproduction (4) pour la focalisation de la lumière (5) rayonnée par la source lumineuse (1) sur un objet (6) à mesurer, comprenant. entre outre un récepteur d'images (10) pour la lumière (7) d'un point de l'objet (6') rétrodiffusée sur l'objet (6) et ayant traversé ladite optique de reproduction (4), avec au moins deux éléments capteurs photosensibles (13, 14), le dispositif de mesurage comprenant des moyens (11) qui pour la modification du chemin optique (d) sont disposés dans le faisceau lumineux entre l'agencement confocal de diaphragmes (3) et l'objet (6), la distance optique (d) du plan d'image à l'optique de reproduction (4) étant modifiable de façon prédéfinie,
**caractérisé en ce que**
- au moins deux éléments capteurs (13, 14) sont associés à un point de l'objet (6') irradié par l'optique de reproduction (4, 9), lorsque le point de l'objet (6') irradié se situe dans la zone nette de la reproduction par l'optique de reproduction (4),
- des moyens (12, 25, 25') influençant l'accumulation de charges (Q₁₃, Q₁₄) dans les au moins deux éléments capteurs (13, 14) par l'intensité lumineuse du faisceau lumineux d'observation (7) pendant la période d'éclairage (T), de sorte que, à partir de leur signal électronique, une association avec la distance optique (d) entre le plan d'image de l'optique de reproduction (4) soit établie, pour que, à partir des signaux récupérés à partir de la distribution des charges accumulées à partir des au moins deux éléments capteurs (13, 14), pendant la période d'éclairage (T) citée, une coordonnée de hauteur (zₛ) de l'objet (6) soit reconstructible, **en ce qu'**il est amené vers un ordinateur pour évaluation, sont prévus pour la modification de la sensibilité et/ou de la surface illuminée des éléments capteurs photosensibles (13, 14).

2. Dispositif de mesurage selon la revendication 1, **caractérisé en ce que** les moyens pour influencer l'accumulation modifient la sensibilité des éléments capteurs (13, 14) et ou la transparence dans le faisceau lumineux d'observation (7) entre l'optique de reproduction (4) et le récepteur d'images (10), notamment la surface illuminée des au moins deux éléments capteurs (13, 14).

3. Dispositif de mesurage selon la revendication 1 ou 2, **caractérisé en ce que**, un agencement de diaphragmes (3) est prévu pour créer un réglage de la luminosité sur l'objet (6).

4. Dispositif de mesurage selon la revendication 3, **caractérisé en ce que** l'agencement de diaphragmes (3) permet d'englober plusieurs points de l'objet (6') un nombre de groupes d'éléments capteurs (13, 14) correspondant au moins à celui des points de l'objet (6') étant prévu.

5. Dispositif de mesurage selon l'une quelconque des revendications 1 à 4, **caractérisé en ce que** des moyens de renvoi (8) du faisceau lumineux d'observation (7) sont disposés dans le faisceau lumineux d'observation (7), entre l'objet (6) et le récepteur (10).

6. Dispositif de mesurage selon la revendication 5, **caractérisé en ce que** le moyen de renvoi (8) est un séparateur de faisceaux.

7. Dispositif de mesurage selon la revendication 5 ou 6, **caractérisé en ce que** le moyen de renvoi (8) est disposé entre l'optique de reproduction (4) et la source lumineuse (1).

8. Dispositif de mesurage selon la revendication 3 ou 4, en association avec la revendication 5 ou 6, **caractérisé en ce que** le moyen de renvoi (8) est disposé entre l'agencement de diaphragmes (3) et la source lumineuse (1).

9. Dispositif de mesurage selon la revendication 3, **caractérisé en ce que** dans le faisceau lumineux d'observation (7) entre l'agencement de diaphragmes (3) et les éléments capteurs (13, 14) est prévu un diaphragme mobile (12) qui en fonction de la course de déplacement masque au moins partiellement des éléments capteurs (13, 14).

10. Dispositif de mesurage selon la revendication 9, **caractérisé en ce que** le diaphragme (12) est conçu de sorte à ce qu'un déplacement du diaphragme (12) provoque une diminution du masquage du au moins un élément capteur (13), une augmentation du masquage du au moins un autre élément capteur (14).

11. Dispositif de mesurage selon la revendication 9 ou 10, **caractérisé en ce que** dans une position initiale, le diaphragme (12) masque totalement au moins une partie des éléments capteurs (13) et **en ce que** dans une position finale, il masque totalement une autre partie des éléments capteurs (14) et dans une position intermédiaire, il masque aussi bien une partie de certains éléments capteurs (13), qu'une partie des autres éléments capteurs (14).

12. Dispositif de mesurage selon l'une quelconque des revendications 2 et 9 à 11, **caractérisé en ce que** le taux de masquage d'une partie de l'élément capteur (13) correspond au taux de masquage de la surface illuminée de l'autre partie de l'élément capteur (14).

13. Dispositif de mesurage selon l'une quelconque des revendications 2 à 8, **caractérisé en ce que** le moyen pour influencer l'accumulation est un élément optique (25) à commande électronique, de transparence variable, notamment un élément LCD.

14. Dispositif de mesurage selon l'une quelconque des revendications 3 à 13, **caractérisé en ce que** l'agencement de diaphragmes (3) est conçu pour le balayage bidimensionnel de l'objet (6).

15. Dispositif de mesurage selon la revendication 14, **caractérisé en ce que** des moyens d'ajustage sont prévus, pour ajuster l'agencement de diaphragmes (3), de sorte à englober également dans une deuxième opération de mesure des régions non reproduites dans le rapport de balayage de l'agencement de diaphragmes (3), au cours d'une première opération de mesure.

16. Dispositif de mesurage selon l'une quelconque des revendications 1 à 14, **caractérisé en ce que** le récepteur d'images (10) est un capteur de lignes (10.2).

17. Dispositif de mesurage selon l'une quelconque des revendications 1 à 14, **caractérisé en ce que** le récepteur d'images (10) est un capteur de superficie (10.3).

18. Dispositif de mesurage selon l'une quelconque des revendications 1 à 17, **caractérisé en ce que** le récepteur d'images (10) est conçu en tant que capteur CCD.

19. Dispositif de mesurage selon l'une quelconque des revendications 1 à 17, **caractérisé en ce que** le récepteur d'images (10) est conçu en tant que capteur CMOS.

20. Dispositif de mesurage selon l'une quelconque des revendications 1 à 11, **caractérisé en ce que** les éléments capteurs (13, 14) sont disposés sur des récepteurs d'images (10, 10') séparés et **en ce que**, un séparateur de faisceaux (24) transmettant la même image au deuxième récepteur d'images (10') est prévu dans le faisceau lumineux d'observation, un enchaînement fondu étant assuré entre les deux récepteurs d'images (10, 10') pendant la période d'éclairage (T), à l'aide de moyens auxiliaires électroniques et/ou optiques.

21. Dispositif de mesurage selon l'une quelconque des revendications 1 à 12, **caractérisé en ce que**, on utilise au moins deux éléments capteurs (13, 14) et **en ce que** la sensibilité de ces derniers augmente avec la course d'ajustage dans l'une des parties des éléments capteurs (13) et diminue dans l'autre partie des éléments capteurs (14).

22. Dispositif de mesurage selon l'une quelconque des revendications 1 à 20, **caractérisé en ce que** la distance de balayage moyenne de l'agencement de diaphragmes (3) correspond à la précision de mesure souhaitée.

23. Procédé de mesurage selon le principe de base de la microscopie confocale, dans lequel, de la lumière (5) est rayonnée à partir d'une source lumineuse (1), par l'intermédiaire d'un agencement confocal de diaphragmes (3) sur un objet (6) à mesurer, la lumière (5) étant focalisée par l'intermédiaire d'une optique de reproduction (4) et dans lequel par ailleurs, la lumière (7) rétrodiffusée sur l'objet (6) et ayant traversé ladite optique de reproduction (4) d'un point de l'objet (6') est réceptionnée au moyen d'un récepteur d'images (10) avec au moins deux éléments capteurs photosensibles (13, 14), la distance optique (d) entre le plan de l'image et l'optique de reproduction (4) étant modifiée de façon prédéfinie par l'intermédiaire de moyens (11) qui sont disposés dans la trajectoire de faisceau entre l'agencement confocal de diaphragmes (3) et l'objet (6), pendant la période d'éclairage (T), **caractérisé**
**en ce que** au moins deux éléments capteurs (13, 14) sont associés à un point de l'objet irradié par les optiques de reproduction (4, 9), lorsque le point de l'objet (6') irradié se situe dans la zone nette de la reproduction par l'optique de reproduction (4),
**en ce que** la dépendance de l'accumulation de charges (Q₁₃, Q₁₄) créées dans les au moins deux éléments capteurs (13, 14) est modifiée par l'intensité lumineuse dans le faisceau lumineux d'observation (7) par l'intermédiaire de moyens (12, 25, 25') pour la modification de la sensibilité et/ou de la surface éclairée des éléments capteurs photosensibles (13, 14), de sorte que, à partir de leur signal électronique, une association soit établie entre l'accumulation et la distance optique (d) entre le plan de l'image et l'optique de reproduction (4), pour que, à partir de la répartition des charges accumulées à partir des au moins deux éléments capteurs (13, 14) pendant une période d'éclairage (T), une coordonnée de hauteur (zₛ) de l'objet (6) soit reconstructible.
